# EUROPEAN PATENT SPECIFICATION

(11) **EP 0 499 870 B1**
(45) Date of publication and mention of the grant of the patent: **22.02.1995**
(21) Application number: 92101792.7
(22) Date of filing: 04.02.1992
(51) Int. Cl.: B62K 11/00

(54) **Attachment apparatus for bicycle parts with improved cord fitting**
Verbesserte Befestigungsvorrichtung für Fahrradkabelteile
Dispositif de fixation des parties d'une bicyclette présentant une fixation d'un câble améliorée

(30) Priority: 18.02.1991 JP 6678/91 U
(43) Date of publication of application: 26.08.1992
(73) Proprietor: CATEYE CO., LTD., Osaka-shi (JP)
(72) Inventor: Takeda, Goro, Soraku-gun, Kyoto (JP)
(74) Representative: Prüfer, Lutz H., Dipl.-Phys.

(56) References cited:
- WO-A-81/02412
- DE-A- 1 765 901
- GB-A- 2 128 819

## Description

### Field of the Invention

The present invention relates to attachment apparatus for bicycle parts and, more particularly, to an attachment apparatus for use in attaching bicycle parts which require connections through cords to bicycles.

### Description of the Background Art

Recently, speedometers are sometimes attached to bicycles in order to readily know travel speed and travel distance of the bicycles.

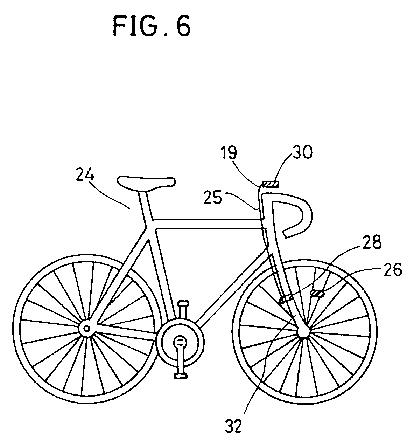

Fig. 6 is a side view showing structure of a bicycle to which such a speedometer is attached.

Referring to Fig. 6, a speedometer 30 is detachably attached to a handle 19. A front-wheel fork 32 of the bicycle is provided with a speed sensor 28 for generating one pulse signal every time a magnet 26 attached to a front-wheel spoke passes in front of speed sensor 28. Speedometer 30 and speed sensor 28 are connected through a cord 25 for transmitting generated signals therethrough.

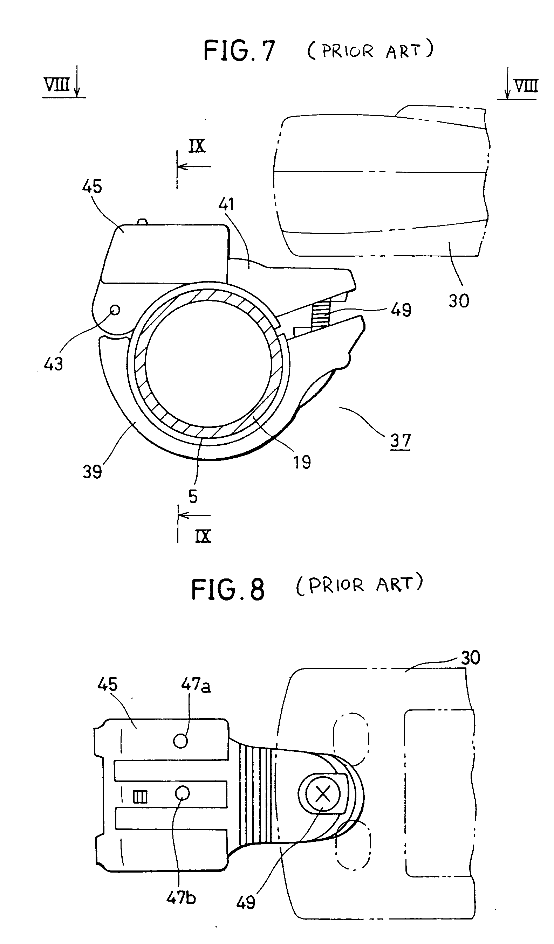

Fig. 7 is an enlarged view of an attachment portion of speedometer 30; and Fig. 8 is a plan view viewed from the line VIII-VIII of attachment parts of Fig. 7.

Referring to Figs. 7 and 8, an attachment part 37 of speedometer 30 comprises a ring portion A39 which is pivotal on a pin 43, and a ring portion B41. Respective ends of ring portions A39 and B41 are fastened by a screw 49. In attachment, ring portions A39 and B41 are opened to interpose handle 19 therebetween with screw 49 being detached, and screw 49 is fastened with a packing 5 fixed between handle 19 and attachment part 37. Attachment part 37 is thus firmly attached on a desired position of the handle. Ring portion B45 is provided with an engagement portion 45 to be detachably engaged with speedometer 30. On a top surface of engagement portion 45 are provided rivet contacts 47a and 47b for transmitting a signal transmitted through cord 25 from speed sensor 28, with speedometer 30 engaged with engagement portion 45.

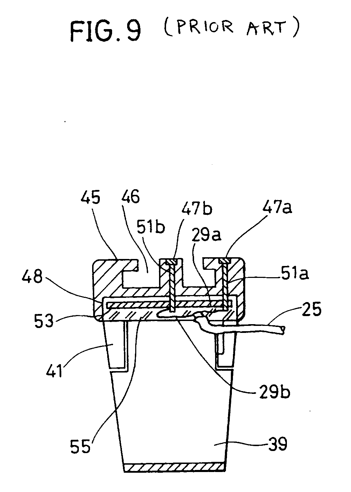

Fig. 9 is a cross-sectional view taken along the line IX-IX of Fig. 7.

Referring to Fig. 9, a double groove 46 for engaging with speedometer 30 is provided in engagement portion 45. A recess 48 is formed in a lower surface of engagement portion 45. A base plate 53 is disposed in recess 48. Rivet contacts 47a and 47b provided on the top surface of engagement portion 45 are conducted to base plate 53 via conductors 51a and 51b, respectively. Respective core wires 29a and 29b of cord 25 are connected by soldering to respective conductors 51a and 51b projected from base plate 53. With respective core wires 29a and 29b of cord 25 connected by soldering, polyurethane resin 55 is sealed in recess 48 of engagement portion 45 in order to seal and protect the connecting portion of core wires 29a and 29b from the outside.

In the above-described conventional attachment apparatus for bicycle parts, it is necessary to provide a resin sealing such as by polyurethane resin, and hence, it takes time to manufacture such apparatus. Once the resin sealing is provided, defects occurring in base plate 53 and the connecting portion of core wires 29a and 29b can not readily be inspected or repaired, resulting in a decrease in yield.

WO-A-8102412 discloses a holder for a lamp with all the features of the first part of claim 1.

### SUMMARY OF THE INVENTION

One object of the present invention is to provide an attachment apparatus for a bicycle part for readily and securely protecting attachment parts of core wires of a cord from the outside.

Another object of the present invention is to provide an attachment apparatus for a bicycle part capable of facilitating inspections, repairs or the like of a core wire attachment portion of a cord.

To accomplish the foregoing objects, an attachment apparatus for a bicycle part in accordance with the present invention is disclosed in claim 1.

In the attachment apparatus for a bicycle part thus structured, when the projected piece and the fitting portion are engaged with each other, a portion of the cord is pressed by the tip end of the projected piece. This ensures a cord fitting, and if the engagement is released, the cord is detached, thereby facilitating an inspection of the cord detachment.

The foregoing and other objects, features, aspects and advantages of the present invention will become more apparent from the following detailed description of the present invention when taken in conjunction with the accompanying drawings.

Fig. 1 is a side view showing attachment of an attachment apparatus according to one embodiment of the present invention.

Fig. 2 is a view viewed from the line II-II of Fig. 1.

Fig. 3 is a view viewed from the line III-III of Fig. 1.

Fig. 4 is a side view showing the state where attachment parts A and B of Fig. 1 are detached from each other.

Fig. 5 is a cross-sectional view taken along the line V-V of Fig. 4.

Fig. 6 is a side view of a general bicycle to which a speedometer and a speed sensor are attached.

Fig. 7 is a side view showing an attachment state of an attachment apparatus of a conventional speedometer.

Fig. 8 is a view viewed from the line VIII-VIII of Fig. 7.

Fig. 9 is a cross-sectional view taken along the line IX-IX of Fig. 7.

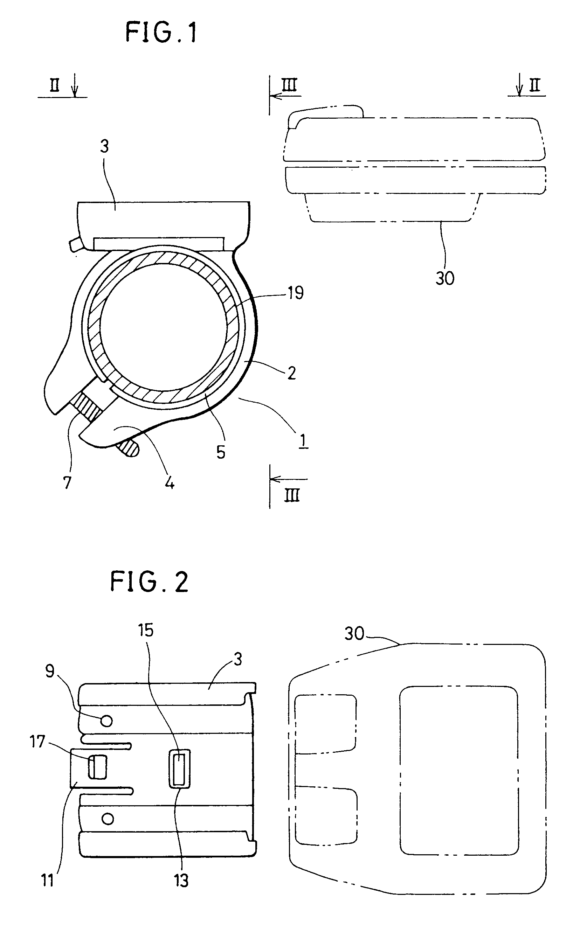

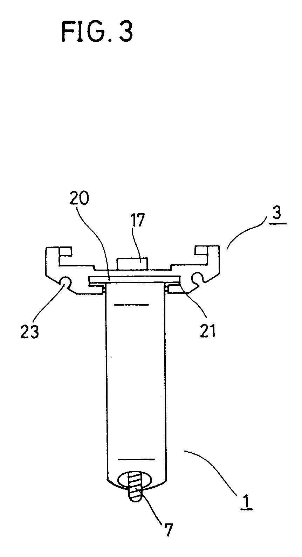

Fig. 1 is a side view of an attachment apparatus according to one embodiment of the present invention; Fig. 2 is a view viewed from the line II-II of Fig. 1; and Fig. 3 is a view viewed from the line III-III of Fig. 1.

Referring to Figs. 1, 2 and 3, an attachment apparatus comprises: a first attachment part 1 including an annular ring portion 2 with its end portion opened, and a screw attached to a ring end portion 4 of ring portion 2; and a second attachment part 3 being a part to which a speedometer 30 is detachably attached and which is attached to first attachment part 1. A flat projected piece 20, in the following referred to as a flat protrusion 20, is formed on a top surface of first attachment part 1 and is slidably engaged with a fitting portion 21, in the following referred to as a groove 21 formed in a lower portion of second attachment part 3. Protrusion 20 of the first attachment part 1 engaged with groove 21 is firmly attached to the second attachment part 3, with a projected portion 15 formed in an upper portion of protrusion 20 being engaged with an opening 13 formed in a lower portion of second attachment part 3. An engagement portion 11 which elastically deforms vertically is provided on a lower surface of second attachment part 3, and a projected portion 17 is formed on a top surface thereof. When speedometer 30 is slidably attached to second attachment part 3, speedometer 30 and second attachment part 3 are firmly attached to each other by projected portion 17. Two rivet terminals 9 for transmitting a signal from a sensor are provided in two places in contact with a lower portion of second attachment part 3 when speedometer 30 is engaged with second attachment part 3. In the lower portion of second attachment part 3, cord through holes 23 for fitting a cord from the speed sensor are each provided on both left and right sides in Fig. 3.

A description will now be made on an operation provided in attaching the attachment apparatus to handle 19. Ring portion 2 of first attachment part 1 is formed such as of plastic resin. Detaching screw 7 allows ring end portion 4 to be broadened. With a packing 5 coated on a desired portion of handle 19 with ring end portion 4 broadened, ring portion 2 is attached thereon and screw 7 is fastened. Thus, the opening of ring end portion 4 is narrowed and hence attachment part A1 is firmly attached to handle 19. In this state, second attachment part 3, to which the cord from the speed sensor is attached through cord through holes 23, is attached to first attachment part 1. Since the attachment of the attachment apparatus is thus completed, attaching speedometer 30 to second attachment part 3, if necessary, allows a desired speed display to be made in response to a signal from the speed sensor.

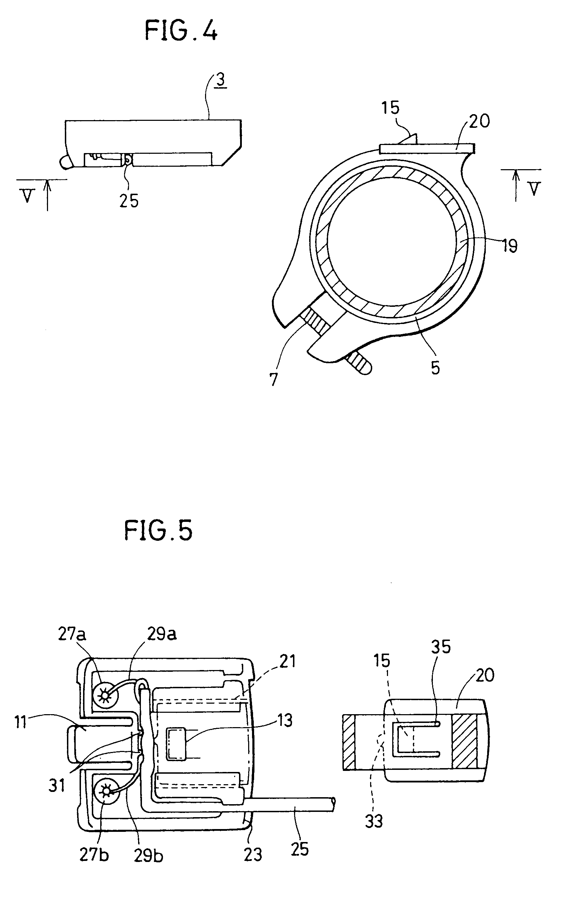

Fig. 4 is a side view showing the state where first and second attachment parts 1 and 3 shown in Fig. 1 are detached from each other; and Fig. 5 is a cross-sectional view taken along the line V-V of Fig. 4.

A description will be given mainly on a connecting state of the cord with reference to Figs. 4 and 5.

A cord 25 introduced from the speed sensor passes through cord through hole 23 and is disposed in a central portion of second attachment part 3. Core wires 29a and 29b of cord 25 are each connected by soldering to push nuts 27a and 27b which are attached to conductors connected respectively to rivet terminals 9 shown in Fig. 2. Two projected portions 31 for pressing cord 25 are provided near the attachment portion of engagement portion 11, in the central portion of second attachment part 3. A projected portion 33 is provided on a tip end portion of protrusion 20 formed on the top surface of attachment part A1. A notch 35 is formed in a central portion of protrusion 20, and projected portion 15 that can elastically deform is formed therein.

As shown by broken lines in Fig. 5, when protrusion 20 of first attachment part 1 is engaged with groove 21 of second attachment part 3, a portion of cord 25 is pressed from both sides by projected portions 31 formed on second attachment part 3 and projected portion 33 formed in protrusion 20 of first attachment part 1. In this state, since projected portion 15 in protrusion 20 is engaged with opening 13 of second attachment part 3, there occurs no decrease in pressure on cord 25 applied by projected portions 31 and 33. Thus, cord 25 is firmly fixed, with first and second attachment parts 1 and 3 being engaged with each other. This prevents an unprepared fall-off of cord 25.

Further, unlike the conventional example, since rivet terminals 9 are provided on the opposite sides of projected portion 17, the distance of push nuts 27a and 27b can be made larger. Accordingly, it is unnecessary to take into account a short-circuit phenomenon in rivet terminals 9a and 9b caused by water drops or the like from the outside, i.e., influences exerted on push nuts 27a and 27b by water drops or the like. It is also unnecessary to carry out resin-sealing by polyurethane resin or the like as in the conventional example. If some defects occur in cord 25 or in the solder-connection of core wires 29a and 29b of cord 25, releasing the engagement of first and second attachment parts 1 and 3 makes it possible to easily detach cord 25 and easily inspect the connecting state of cord 25.

While the disclosed attachment apparatus is applied to bicycle parts of a speedometer in the foregoing embodiment, the apparatus is likewise applicable to other bicycle parts which require a cord connection.

While projected portions are provided respectively on the first attachment part side and the second attachment part side in the foregoing embodiment, the number of such projected portions is not limited, and even if such projected portions are not provided, a sufficient effect of cord fixing is achieved as compared to the conventional example.

Although the present invention has been described and illustrated in detail, it is clearly understood that the same is by way of illustration and example only and is not to be taken by way of limitation, the scope of the present invention being limited only by the terms of the appended claims.

## Claims

1. An attachment apparatus for a bicycle part (30), comprising:
a first attachment part (1) attachable to component parts (19) of a bicycle and having a flat projected piece (20);
a second attachment part (3) having a fitting portion (21) slidable with respect to said projected piece (20) and provided for attachment to said first attachment part (1) by using said fitting portion (21) and for fixing a bicycle part (30) thereon; said attachment part (3) having at least one terminal for connection with said bicycle part (30)
a cord (25) connected to said terminal (9) characterized in that said cord (25) is disposed in the vicinity of said fitting portion (21) of said second attachment part (3), and
when said projected piece (20) and said fitting portion (21) are engaged with each other, a portion of said cord (25) is pressed by a tip end (33) of said projected piece against a portion (31) of said second attachment part (3).

2. The attachment apparatus of claim 1, wherein
a single first projected portion (33) is formed on the tip end of said projected piece (20), and two second projected portions (31) are formed on opposite sides of said second attachment part (3) at a position corresponding to said first projected portion (33) when said projected piece (20) and said fitting portion (21) are engaged with each other, and wherein said cord (25) is pressed at three points by said first projected portion (33) and said second projected portions (31).

3. The attachment apparatus of claim 1, wherein
said bicycle parts (30) comprise a speedometer 30.

## Patentansprüche

1. Befestigungsvorrichtung für ein Fahrradteil (30), mit einem ersten Anbringungsteil (1), das an Komponententeilen (19) eines Fahrrades anbringbar ist und ein flaches vorstehendes Teil (20) aufweist;
einem zweiten Anbringungsteil (3), das einen Passungsabschnitt (21) aufweist, der in Bezug auf das vorstehende Teil (20) verschiebbar ist, und das zum Befestigen an dem ersten Anbringungsteil (1) durch Benutzen des Passungsabschnittes (21) und zum Befestigen eines Fahrradteiles (30) darauf vorgesehen ist;
wobei das Anbringungsteil (3) mindestens einen Anschluß zur Verbindung mit dem Fahrradteil (30) aufweist;
einer Leitungsschnur (25), die mit dem Anschluß (9) verbunden ist;
dadurch gekennzeichnet,
daß die Leitungsschnur (25) in der Nähe des Passungsabschnittes (21) des zweiten Anbringungsteiles (3) vorgesehen ist und daß, wenn das vorstehende Teil (20) und der Passungsabschnitt (21) in Eingriff miteinander stehen, ein Abschnitt der Leitungsschnur (25) durch ein Spitzenende (33) des vorstehenden Teiles gegen einen Abschnitt (31) des zweiten Anbringsteiles (3) gepreßt wird.

2. Befestigungsvorrichtung nach Anspruch 1,
bei der ein erster vorstehender Abschnitt (33) auf dem Spitzenende des vorstehenden Teiles (20) gebildet ist und zwei zweite vorstehende Abschnitte (31) auf gegenüberliegenden Seiten des zweiten Anbringungsteiles (3) an einer Position gebildet sind, die dem ersten vorstehenden Abschnitt (33) entsprechen, wenn das vorstehende Teil (20) und der Passungsabschnitt (21) in Eingriff miteinander stehen, und
bei der die Leitungsschnur (25) an drei Punkten durch den ersten vorstehenden Abschnitt (33) und die zweiten vorstehenden Abschnitte (31) gepreßt wird.

3. Befestigungsvorrichtung nach Anspruch 1,
bei der die Fahrradteile (30) ein Tachometer (30) aufweisen.

## Revendications

1. Dispositif de fixation pour un élément de bicyclette (30), comprenant :
un premier élément de fixation (1) qui peut être fixé à des éléments constitutifs (19) d'un bicyclette et qui comprend une pièce saillante plane (20) ;
un deuxième élément de fixation (3) ayant une partie de réglage (21) qui peut coulisser par rapport à ladite pièce saillante (20) et est prévue pour se fixer audit premier élément de fixation (1) en utilisant ladite partie de réglage (21) et pour y fixer un élément de bicyclette (30) ;
ledit élément de fixation (3) ayant au moins une terminaison pour le raccordement audit élément de bicyclette (30),
un câble (25) relié à ladite terminaison (9),
caractérisé en ce que ledit câble (25) est disposé dans le voisinage de ladite partie de réglage (21) dudit deuxième élément de fixation (3) et, lorsque ladite pièce saillante (20) et ladite partie de réglage (21) sont en prise entre elles, une partie dudit câble (25) est pressée par une extrémité de pointe (33) de ladite pièce saillante contre une partie (31) dudit deuxième élément de fixation (3).

2. Dispositif de fixation selon la revendication 1, dans lequel
une unique première partie saillante (33) est formée sur l'extrémité de pointe de ladite pièce saillante (20), et deux deuxièmes parties saillantes (31) sont formées sur des côtés opposés dudit deuxième élément de fixation (3), dans une position qui correspond à ladite première partie saillante (33) lorsque ladite pièce saillante (20) et ladite partie de réglage (21) sont en prise entre elles, et dans lequel ledit câble (25) est pressé en trois points par ladite première partie saillante (33) et lesdites deuxièmes parties saillantes (31).

3. Dispositif de fixation selon la revendication 1, dans lequel lesdits éléments (30) de bicyclette comprennent un cinémomètre (30).
